Europäisches Patentamt

European Patent Office

Office européen des brevets

(11) Publication number: **0 384 629**
**A2**

# EUROPEAN PATENT APPLICATION

(21) Application number: **90301521.2**

(22) Date of filing: **13.02.90**

(51) Int. Cl.⁵: **B23K 20/00**

(30) Priority: **22.02.89 GB 8904038**

(43) Date of publication of application:
**29.08.90 Bulletin 90/35**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Lloyd, Arthur Leslie**
**52 Church Road**
**Oxley, Wolverhampton WV12 6AF(GB)**

(74) Representative: **Pearce, Anthony Richmond et al**
**MARKS & CLERK Alpha Tower Suffolk Street**
**Queensway Birmingham B1 1TT(GB)**

(54) **Composite articles and methods for their production.**

(57) A screw-threaded element, a gear or a cylinder of a piston and cylinder device is produced by diffusion bonding (typically by hot isostatic pressing) a cladding material to a suitably shaped body. The cladding material is shaped before, during or after the diffusion bonding step to define (a) screw threading in the case of a screw or a nut, (b) gear teeth in the case of a gear, or (c) an internal cylinder wall having good piston seal characteristics in the case of a cylinder of a piston and cylinder device.

FIG 1

EP 0 384 629 A2

# COMPOSITE ARTICLES AND METHODS FOR THEIR PRODUCTION

This invention relates to composite articles and methods for their production, and is particularly concerned with an article which is intended to engage against another article with relative movement (eg. rotary and/or sliding movement) therebetween, such as a screw threaded rod or a nut for an actuator, eg a ball screw jack, and a cylinder of a piston and cylinder device, or an article having gear teeth.

In the case of screw threaded rods for ball screw jacks in actuators, eg for aircraft flying control surfaces, such rods have previously been manufactured from carbon steel, followed by a heat treatment process, such as carburising, to provide a hard outer skin and a tough core. However, such rods do not provide optimum size, wear, corrosion resistance and core toughness properties. More recently, screw threaded rods for ball screw jacks have been manufactured from a through-hardened stainless steel. Such rods have a hard outer skin and a hard core, which does not have optimised toughness properties.

In the case of cylinders of piston and cylinder type actuators, eg for use in aircraft, it is desirable to form such cylinders out of a light material eg titanium or titanium alloy for weight saving reasons. However, it is found that such materials do not produce a particularly effective durable seal with the plastics or rubber seal used on the piston which is mounted in the cylinder in the completed actuator. Attempts to solve this problem by force fitting a thin sleeve of a more suitable material into the cylinder have not met with success because distortion and relative movement in use between the sleeve and the titanium cylinder has impaired the sealing properties.

Hot isostatic pressing is a per se known process and has previously been proposed for fabricating composite nozzles for water-cooled gas turbines (see US Patent 4283822), for manufacturing clad turbine airfoil assemblies (see GB-A-2063747), for producing corrosion-resistant tubular connection pieces (see US Patent 4454977), and for shaping sheets of difficult-to-form material, eg nickel-based superalloys (see EP-A-0192105). However, as far as we are aware it has never been proposed to use hot isostatic pressing for the production of screw-threaded elements, cylinders of piston and cylinder devices, or gears.

According to the present invention, there is provided an article which is intended to engage against another article with relative movement therebetween, said article comprising a body having a surface region which (a) engages with said another article in use and (b) is defined at least partly by a cladding, said cladding being connected to the material of the body by diffusion bonding and being harder than the material of the body.

The diffusion bonding is preferably achieved in a hot isostatic pressing process wherein the assembly of parts to be diffusion bonded is placed in a furnace into which argon or other unreactive gas is pumped, the furnace is heated electrically and the pressure of the gas rises, and the conditions of high pressure and temperature are held for a period of time sufficient to cause diffusion bonding of the mutually engaging surfaces of the parts. The hot isostatic pressing step is effected under conditions such as to ensure that diffusion bonding takes place. The precise conditions under which this happens depends, inter alia, upon the nature of the materials to be bonded together. However, hot isostatic pressing will usually be effected at a pressure of greater than 50 mPa, preferably in the region of 100 mPa. The temperature is usually in the range of 900 - 1100° C, particularly in the case of steels which may exhibit grain growth at 1100° C. The temperature is preferably about 1050° C. The time of treatment is preferably about 1 - 8 hours, and is typically of the order of 4 hours.

The present invention thus permits optimisation of the properties of the cladding and the main body of the element to satisfy their respective functions. In the case where the article is a screw-threaded element, such element may be in the form of an externally screw-threaded rod wherein the body may be hollow or solid. At least one end of the rod may be covered with a diffusion bonded end piece. Alternatively, the element may be in the form of a nut wherein the cladding is provided internally of the body.

Preferably, the body is formed of tough, high tensile iron or steel, eg precipitation-hardened stainless steel eg according to BS S 143 (such as FV 520), BS S 144 or BS S 145. The cladding is formed of a harder material such as hard stainless tool steel (eg AMS 5749) or a hard non-ferrous alloy, eg a chromium-cobalt-tungsten-molybdenum alloy such as is sold under the trade mark Stellite.

In the case where the article is one having gear teeth, the body may have such gear teeth on an external or an internal surface region thereof.

Also according to the present invention, there is provided a method of producing an article which is intended to engage against another article with relative movement therebetween, said method comprising the steps of diffusion bonding a cladding material to a body, said cladding being harder than the body and defining a surface region which engages with said other article in use; and before, during or after said diffusion bonding step, forming the cladding material to the desired shape

In the case where the article is a screw-threaded element, in one embodiment, the cladding material is engaged with the body, the joint therebetween is sealed, optionally evacuated and held in this condition during the diffusion bonding step, the diffusion bonding step is effected, and the screw threading is subsequently cut or ground into the diffusion bonded cladding.

In another embodiment, the cladding material in a cylindrical form is engaged with a body which already carries screw threading, the joint between the cladding and the body is sealed, optionally the space between the cladding and the body within the screw threads is evacuated, and a hot isostatic pressing and simultaneous diffusion bonding step is effected so as to deform the cladding material into the screw threads of the body whereby the screw threading in the cladding material is formed at the time of diffusion bonding.

In a further embodiment, a cylinder of the cladding material is hot isostatically pressed on a separate screw-threaded former so that the cladding material is deformed into the screw-threads but without diffusion bonding taking place at this stage. The cylinder with the screw-threading formed therein is then removed from the screw-threaded former, engaged with a screw-threaded body, and diffusion bonded thereto to form the screw-threaded element. This pre-forming of the cladding cylinder serves to provide the cladding with dimensions chosen to optimise the later bonding operation, and also permits intermediate treatment of either or both parts to be effected. In an alternative, the cladding material is preformed on the screw-threaded body itself, removed to permit either or both parts to be subjected to an interim treatment, and then remounted on the body, followed by sealing and optional evacuation of the joint and diffusion bonding.

In a convenient aspect of the last two embodiments, in cases where evacuation of the joint is considered necessary or desirable, the joint between the cladding and the body is evacuated through an external tube or a hole provided in the cladding material or the body in a region thereof which is not present in the finished screw threaded element but which is removed after the diffusion bonding process. In the case where evacuation is effected through an external tube welded to a hole in the cladding or the body, the tube may then be sealed in any desired way, for example by pinching it closed and then folding and welding it so as to hold the vacuum in the joint. In the case where evacuation is effected using a hole in the cladding or the tube, the hole may be sealed in any desired way for example by effecting evacuation in an electron beam welding apparatus followed by sealing the hole by means of an electron beam weld to hold the vacuum in the joint. These sealing features can be removed as desired after the diffusion bonding step has been completed.

In the case where the screw-threaded element is of considerable length, in order to overcome the risk of distortion along the length, the assembly of cladding material and body can be supported by a suitable support, eg a ceramic material, for the diffusion bonding process. In the case of a screw-threaded element in the form of a solid rod, the support is conveniently in the form of a ceramic cylinder into which the assembly of body and cladding is placed.

In the case of a screw-threaded element where the body takes the form of a hollow rod, a ceramic core may be placed in such rod to prevent deformation of the body under pressure during diffusion bonding. This technique is particularly suitable for rods having a deep screw threaded formation thereon, which can result in relatively thin sections at the base of the screw threads. Particularly where a hollow rod is used, it may be preferred to use "cup" shaped sleeve (ie a sleeve which has one end closed by an end wall integral with the side wall of the sleeve) of cladding material. This requires only one annular weld to seal the joint between the open end of the sleeve and the body. Conveniently, a separate end plate may be welded to the open end of the sleeve to seal the whole assembly prior to evacuation. This has the advantage that the whole assembly is subjected to inward pressure during diffusion bonding so that there is no risk of portions of the hollow rod being outwardly deformed. Such risk can arise where the inside of the hollow rod is exposed to high pressure during diffusion bonding. The end plate can be cut away and the ceramic core removed after diffusion bonding.

The cladding material may take the form of a sleeve which may be machined from solid bar. However, it is considered feasible to produce the sleeve by means of a drawing operation or to form the sleeve by helically winding a continuous strip of the cladding material. Such a helically wound sleeve may be provided by helically winding the cladding material strip directly onto the body or by forming it before engagement with the body. Alternatively, the cladding material may be produced by sintering particulate cladding material. In the case where the cladding is provided by a helically wound strip or a sintered powder, it is necessary to enclose the body and the cladding in a sealed container which is evacuated before diffusion bonding, to ensure that a vacuum seal is maintained in the bonding area. As an alternative, it is possible to use a green powder pre-form of the requisite shape, eg a hollow threaded sleeve, which may, if necessary, include a temporary binder. Such a green powder pre-form can be engaged with the body and then diffusion bonded thereto. During the diffusion bonding, sintering, curing and bonding can all take place.

The above methods are considered to be applicable to the production of screw-threaded elements in the form of rods, and mutatis mutandis may also be used for the production of screw-threaded elements in the form of nuts wherein the cladding material is provided within the nut.

The above techniques, particularly the green powder pre-form technique, are considered suitable for use in the production of articles having gear teeth thereon or therein, eg gear wheels, toothed racks etc. For example, an internally or externally toothed gear having a body of titanium can have a steel cladding material bonded thereto so that the steel cladding defines the gear teeth. Alternatively, a green powder (eg ceramic powder) pre-form having the gear teeth formed therein or thereon may be engaged with and diffusion bonded to the body.

In the case where the article is a cylinder of a piston and cylinder device, the cylinder preferably comprises a hollow body formed of a metal or alloy of low density, (ie lower than the cladding) eg titanium or titanum alloy, and having an internal wall lined with a diffusion bonded cladding of material having good (ie better than that of the body) piston seal characteristics, eg stainless steel. Diffusion bonding is preferably effected in a hot isostatic pressing process.

It is envisaged that the cladding of the cylinder can be formed of a very thin material so as to form only about 10% of the total weight of the body, the remaining 90% being made up of the light metal or alloy which provides the necessary structural strength properties. With such a cladding, the risk of relative movement between the cladding and the body is minimised because diffusion bonding occurs over the total area of contact between the parts.

The cylinder can be formed by inserting a preformed lining of the cladding material into the sleeve, sealing and optionally evacuating of the joint using any of the above-described techniques, and then diffusion bonding. However, in a preferred embodiment, a body in the form of a tube closed at one end is fitted with a correspondingly shaped closed ended tube of the cladding material. The joint between the two parts at the open ends of the respective tubes is sealed in any desired way, eg by welding, and is optionally evacuated eg in any of the ways described hereinabove. The two parts are then diffusion bonded together over their engaging surfaces in a hot isostatic pressing operation, and finally the closed end of the tubes are finished in any desired way. For example, the closed end of the body may be drilled to provide a bore for receiving a piston rod and the closed end of the cladding material tube may be removed so as to leave a plain cylinder on the internal peripheral wall of the body.

The cladding material may be urged to conform to one or more grooves in the body in order to give a visual confirmation that the hot isostatic pressing has been effective and to ensure a mechanical key.

In all of the above described embodiments, during hot isostatic pressing, in cases where migration of atoms from the cladding material to the body, or vice versa, can adversely affect the properties of either component, it is possible to provide a barrier layer between the parts. For example, a nickel barrier layer may be provided to prevent carbon migration.

It is within the scope of the present invention to heat treat the diffusion bonded article to develop or enhance the desired properties of the cladding and/or the body material, eg by hardening, tempering or precipitation treatment, or any combination thereof.

The present invention will now be described in further detail with reference to the accompanying drawing, in which:-

Fig. 1 is a schematic axial section through part of an assembly used to produce a screw-threaded rod illustrated in Fig. 2,

Fig. 2 is a schematic axial section through the screw-threaded rod for use in a ball screw jack,

Fig. 3 is a schematic axial section showing a stage in the production of another screw-threaded rod,

Fig. 4 is a schematic section through a screw-threaded rod according to the present invention showing a pair of annular end plates,

Fig. 5 is a schematic section through an assembly of two components used to produce a cylinder for use in a gas turbine engine thrust reverser nozzle actuation arrangement, and

Fig. 6 is a schematic section through the completed cylinder produced from the assembly of Fig. 5.

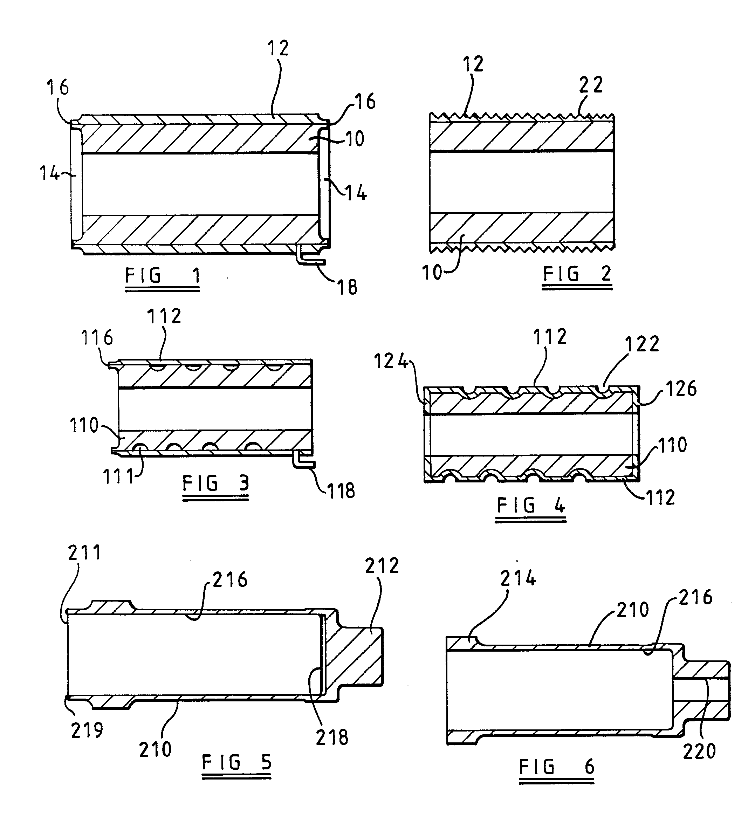

Referring now to Fig. 1, there is illustrated an assembly of tubular body 10 and annular outer sleeve 12 which fits closely over the peripheral surface of the body 10. The body 10 has a thin coating of nickel on its peripheral surface eg by electroplating. At each end of the body 10 and sleeve 12, the wall thicknesses is substantially reduced in the regions of the outer peripheral surface of the body 10 and of the inner peripheral surface of the sleeve 12 so as to form an axially extending rim 14. The joint between the body 10 and the sleeve 12 is completely sealed by welding (eg TIG welding) the materials together around each rim 14 as typically shown at 16. Adjacent one end of the sleeve 12, a tube 18 is welded into a hole provided through the sleeve so that the joint is open to atmosphere at this stage.

Subsequently, the joint is evacuated through the tube 18, which is then pinched, folded and welded to maintain the vacuum within the joint. Then the resultant assembly is subjected to a diffusion bonding operation in a hot isostatic pressing furnace.

In a typical example, the body 10 is formed of a precipitation hardened stainless steel according to British Standard S 143 containing, by weight, up to 0.07% carbon, up to 0.60% silicon, up to 1.00% manganese, up to 0.035% phosphorus, up to 0.025% sulphur, 13.2 to 14.7% chromium, 1.20 to 2.00% copper, 1.20 to 2.00% molybdenum, 0.10 to 0.40% niobium and 5.0 to 5.8% nickel, the remainder being iron. Such a steel has a tensile strength of 930-1080 N/mm$^2$. The sleeve 12 has a thickness of about 0.75 - 1 times the diameter of the ball to be engaged with the screw threaded rod. The sleeve is machined from a solid bar of stainless tool steel AMS 5749 containing, by weight, 1.10 to 1.20% carbon, 0.30 to 0.60% manganese, 0.20 to 0.40% silicon, up to 0.015% phosphorus, up to 0.010% sulphur, 14.00 to 15.00% chromium, 3.75 to 4.25% molybdenum, 1.10 to 1.30% vanadium, up to 0.40% nickel and up to 0.35% copper, the remainder being iron. Such an alloy is very hard, having a hardness in excess of 60 on the Rockwell C scale. The hot isostatic pressing is effected at a temperature of the order of 1000°C (although it may be up to 1150°C) at a pressure of about 276 MPa for a period of time of about 12 to 15 hours. The process is carried out in an argon environment, the argon being initially pumped into the furnace to a pressure of about 13.8 MPa before heating is commenced. The nickel coating acts as a barrier which prevents carbon migration from the sleeve 12 to the body 10 but which still permits effective diffusion bonding.

After the hot isostatic pressure bonding process has been completed, the assembly is allowed to cool under the protective argon atmosphere of the furnace. The component is then removed from the furnace and machined at the ends to remove the adjacent welded rims. A screw form 22 is then cut into the outer surface of the sleeve 12. It will be appreciated that the sleeve 12 forms a cladding which has a very high hardness, and that the body 10 has high toughness and tensile strength properties. In a modification (not shown), the body 10 is solid rather than tubular.

Referring now to Fig. 3, there is shown a tubular core 110 formed of BS S143 steel with a nickel plated barrier layer on its outer peripheral surface. The core 110 has a ball screw thread 111 formed in its outer peripheral surface. A thin (eg 1.5mm) outer sleeve 112 of stainless tool steel AMS 5749 is provided over the core 110 and the joint therebetween is sealed at each end by an annular TIG welded joint 116. The clearance between the sleeve 112 and the core 110 is 0.13 - 0.25 mm in this embodiment. A tube 118 is welded in a hole provided through the sleeve 112 adjacent one end thereof so as to enable the space between the sleeve 112 and the outer peripheral surface of the core 110 to be evacuated. Following this, the tube 118 is pinched, folded and welded in order to hold the vacuum in the screw-threaded region of the core 110. Thereafter, the thus-produced assembly is subjected to hot isostatic pressing under similar conditions to those described above in relation to Figs. 1 and 2. During the hot isostatic pressing, the sleeve 112 is deformed inwardly so as to conform to the peripheral surface of the core 110. In so doing, inward deformation of the sleeve 112 in the region of the screw-threading 111 causes screw-threading 122 (see Fig. 4) to be formed on the outer surface of the assembly. At the same time, the sleeve 112 is diffusion bonded to the core 110 over the whole of the area of contact between these two parts. Subsequently, the component is taken out of the hot isostatic pressing furnace and is finished by removing the previously welded regions 116 at the opposite ends of the rod. The resultant screw threaded rod has a construction similar to that illustrated in Fig. 4 but without annular end plates 124 and 126. Referring now to Fig. 4, the screw-threaded rod is produced in a similar way to that described about in relation to Fig. 3 and similar parts are accorded in same reference numerals. In this embodiment, however, instead of utilising a plain sleeve 112, a sleeve 112 having one end completely closed by an end wall is employed, such end wall being destined to form the annular end plate 124 in the finished rod. The body 110 is inserted into the sleeve and a circular disk which is destined to form plate 126 is welded to the open end of the sleeve 112. The whole assembly is then completely evacuated and sealed to hold the vacuum during the subsequent diffusion bonding operation. After diffusion bonding, the end wall and the disk are drilled through so as to define the annular end plates 124 and 126 respectively. If necessary, a ceramic core may be provided as a temporary support in the hollow body 110 before the assembly is sealed and evacuated. The core is subsequently removed after diffusion bonding.

Referring now to Figs. 5 and 6 of the drawings, there is an assembly of parts used in the manufacture of a light weight cylinder for use in a piston and cylinder device which is required to be light in weight, for example, for use in a gas turbine engine thrust reverser nozzle actuator. In Fig. 5, there is shown a titanium cylinder 210 which is open at end 211 and closed by a solid boss 212 at the other end. Disposed within the bore of the cylinder 210 is a thin stainless steel cup 216 having a base 218 which, for convenience of handling and manufacture, is thicker than the peripheral wall of the cup 216. The cup 216 is a close fit within the cylinder 210. The joint between the cup 216 and the cylinder 210 is sealed by a single annular weld 219 between these parts at the open end 211 of the cylinder 210. In order to provide the necessary vacuum between the cylinder 210 and the cup 216 to enable effective diffusion bonding, evacuation may be effected by any of the above-mentioned techniques. However, an alternative is to evacuate the joint and effect the weld 219 whilst maintaining the vacuum.

After the assembly described in relation to Fig. 5 has been produced, diffusion bonding of the wall of the cup 216 to the internal peripheral surface of the cylinder 210 is effected by hot isostatic pressing in a similar manner to that described above in relation to Fig. 1. After the cup 216 has been diffusion bonded over the whole of its surface to the cylinder 210, the base 218 is machined away so as to leave a plain sleeve of stainless steel firmly attached over the whole of its peripheral surface to the internal peripheral surface of the cylinder 210 by diffusion bonding. The boss 212 is coaxially drilled to provide a bore 220 which accommodates the piston rod (not shown) of a piston (also not shown) in the completed piston and cylinder device. The internal stainless steel surface of the titanium cylinder 210 enables a good sealing relationship to be achieved and maintained with a plastics or rubber seal on the piston. The external surface and end of the cylinder 210 is machined to remove the weld 219 and provide a flange 214 with axially extending mounting holes therein (not shown) so as to enable the cylinder to be bolted to the remainder of the actuator to which the cylinder is secured.

## Claims

1. An article which is intended to engage against another article with relative movement therebetween, said article comprising a body having a surface region which (a) engages with said another article in use and (b) is defined at least partly by a cladding, which cladding being connected to the material of the body by diffusion bonding and being harder than the material of the body.

2. An article as claimed in claim 1, in the form of a screw-threaded element wherein said surface region has screw-threading thereon.

3. An article as claimed in claim 2, wherein the screw-threaded element is an externally screw-threaded rod, and the body is hollow or solid.

4. An article as claimed in claim 2, wherein the body is hollow and said surface region is provided internally of the body.

5. An article as claimed in any preceding claim, wherein the body has screw threading on a region thereof over which the cladding is provided.

6. An article as claimed in any one of claims 1 to 4, wherein the body us un-screwthreaded on a region thereof over which the cladding is provided.

7. An article as claimed in claim 1, in the form of a cylinder of a piston and cylinder device, and wherein the cladding defines the internal surface of the cylinder.

8. An article as claimed in claim 7, wherein the body is a hollow body formed of a metal or alloy of low density, and wherein the internal wall of the body is lined with the cladding which is formed of a material having good piston seal characteristics.

9. An article as claimed in claim 8, wherein the body is formed of titanium or titanium alloy.

10. An article as claimed in claim 8 or 9, wherein the cladding is formed of stainless steel.

11. An article as claimed in claim 1, having gear teeth in said surface region.

12. A method of producing an article which is intended to engage another article with relative movement therebetween, said method comprising the steps of diffusion bonding a cladding material to the body, said cladding material defining a surface region which, in use, engages with said another article; and before, during or after said diffusion bonding step, forming the cladding material to the desired shape.

13. A method as claimed in claim 12, wherein the article is a screw-threaded element, and the forming step comprises forming screw-threading in the cladding material.

14. A method as claimed in claim 12, wherein the article has gear teeth, and the forming step comprises forming the gear teeth in the cladding material.

15. A method as claimed in claim 12, wherein the article is a cylinder of a piston and cylinder device which is produced by inserting a tube closed at one end and formed of cladding material into a correspondingly shaped closed-ended tube defining the body, sealing the joint between the two parts at the open ends of the respective tubes, and then effecting the diffusion bonding step.

16. A method as claimed in any one of claims 12 to 15, wherein the diffusion bonding step is effected by hot isostatic pressing.

17. A method as claimed in any one of claims 12 to 14, wherein the forming step is effected by a cutting or grinding operation on the cladding material after the diffusion bonding step.

18. A method as claimed in claim 13, wherein the body has screw-threading on a region thereof, the cladding material in a cylindical form is engaged with the body, the joint between the cladding material and the body is sealed, and diffusion bonding with hot isostatic pressing is effected to deform the cladding material into the screw-threading on the body.

FIG 1

FIG 2

FIG 3

FIG 4

FIG 5

FIG 6